# EUROPÄISCHE PATENTSCHRIFT

(11) **EP 2 265 972 B1**
(45) Veröffentlichungstag und Bekanntmachung des Hinweises auf die Patenterteilung: **10.08.2011**
(21) Anmeldenummer: 08873617.8
(22) Anmeldetag: 12.11.2008
(51) Int. Cl.: G01S 7/52, G01S 15/93, H04L 29/12, G01S 15/87

(54) **ADRESSIERUNG VON SENDE- UND EMPFANGSEINHEITEN EINER ULTRASCHALLABSTANDSMESSEINRICHTUNG**
ADDRESSING TRANSMITTING AND RECEIVING UNITS OF AN ULTRASONIC DISTANCE MEASURING DEVICE
ADRESSAGE D'UNITÉS ÉMETTRICES ET RÉCEPTRICES D'UNE INSTALLATION DE MESURE DE DISTANCE À ULTRASONS

(30) Priorität: 26.03.2008 DE 102008000826
(43) Veröffentlichungstag der Anmeldung: 29.12.2010
(73) Patentinhaber: Robert Bosch GmbH, 70442 Stuttgart (DE)
(72) Erfinder: SEITER, Michael, 71735 Eberdingen-Hochdorf (DE); KLOTZ, Albrecht, 72631 Aichtal (DE); TREPTOW, Thomas, 71229 Leonberg (DE); HERING, Michael, 71229 Leonberg (DE); SCHMID, Dirk, 75397 Simmozheim (DE); GERLACH, Michael, 71263 Weil Der Stadt (DE); RAPPS, Peter, 76227 Karlsruhe (DE); HERDER, Bjoern, 70469 Stuttgart (DE)
(86) Internationale Anmeldenummer: PCT/EP2008/065383
(87) Internationale Veröffentlichungsnummer: WO 2009/118061

(56) Entgegenhaltungen:
- EP-A- 0 980 165
- EP-A- 1 455 278
- DE-A1-102005 054 390
- DE-A1-102005 055 964

## Beschreibung

Die vorliegende Erfindung betrifft ein System und ein Verfahren zur Adressierung einer Mehrzahl von Sende- und Empfangseinheiten einer Ultraschallabstandsmesseinrichtung.

### Stand der Technik

Ultraschallababstandsmesseinrichtungen kommen insbesondere bei Kraftfahrzeugen zum Einsatz, wo mit Hilfe von Sende- und Empfangseinheiten, insbesondere für Ultraschall-, Radar- und Infrarotsignale, die zu mehreren an der Kraftfahrzeugkarosserie fest montiert sind, Hindernisse in der Umgebung des Fahrzeugs detektiert werden und ggf. ein Warnsignal erzeugt wird, um den Fahrer des Fahrzeugs in unübersichtlichen Verkehrssituationen , wie etwa beim Einparken, vor einer potentiell gefährlichen Annäherung an ein Hindernis zu warnen. Eine derartige Ultraschallababstandsmesseinrichtung und ein Verfahren zu ihrem Betrieb sind z.B. aus der DE 40 23 538 A1 bekannt.

Außerdem ist aus der DE 101 38 001 A1 eine Ultraschallabstandsmesseinrichtung für den Einsatz in Kraftfahrzeugen bekannt, welche eine Mehrzahl von Sende- und Empfangseinheiten zum Aussenden von Signalen und Empfangen der von einem externen Gegenstand zurückgeworfenen Echos umfasst. Des weiteren ist in dieser Einrichtung eine Auswertungseinheit zum Abschätzen der Entfernung von der Abstandsmesseinrichtung zu dem externen Objekt anhand der empfangenen Echos vorgesehen. Diese Ultraschallabstandsmesseinrichtung weist einen Betriebszustand zum Berechnen der relativen Positionen der Sende- und Empfangseinheiten zueinander anhand der zurückgeworfenen Echos auf.

Konventionelle ultraschallbasierte Fahrassistenzsysteme (US-FAS), insbesondere die ultraschallbasierte Einparkhilfe (US-EPH), befinden sich seit über zehn Jahren auf dem Markt. Typische Systemkonfigurationen der US-EPH besitzen zwei bis sechs Sensoren pro Stoßfänger. Alle bislang bekannten Systeme verwenden Punkt-zu-Punkt-Verbindungen zur Datenübertragung zwischen den Sensoren und dem Steuergerät. Die Punkt-zu-Punkt-Verbindungen übertragen entweder analoge Rohsignale, vorverarbeitete Daten über herstelherstellerspezifische proprietäre Schnittstellen bzw. die LIN-Schnittstelle. In diesen konventionellen Systemen werden baugleiche Sensoren verwendet, wobei die logische und geographische Adressierung über die Punkt-zu-Punkt-Verbindungen erfolgt. Die genaue Kenntnis darüber, welcher Sensor an welcher Position im Stoßfänger verbaut wurde, ist für das System von Bedeutung, da die Sensoren individuell von Steuergerät angesteuert und die Information der Sensoren (z.B. empfangene Echos) eindeutig einer geographischen Position im Stoßfänger zugeordnet werden müssen, um z.B. eine genaue Abstandberechnung durchführen oder ein Display mit lateraler Auflösung ansteuern zu können.

Aus der DE 10 2005 055 964 A1 ist ein Verfahren zur Zuweisung eindeutiger Bus-Adressen an Sensoren eines Kfz-Sensorsystems bekannt, wobei diese über eine Laufzeitmessung eines Signals, das zwischen Master und Slave auf den Bus übertragen wird, erfolgt. Weiterhin ist aus der EP 0 980 165 ein weiteres Verfahren einer Adresszuweisung entsprechend der Leitungslänge des Busses zwischen Master und Knoten bekannt.

### Vorteile der Erfindung

Wie im unmittelbar vorangehenden Abschnitt erläutert, erfolgt die logische und geographische Adressierung der Sensoren bzw. Sende- und Empfangseinheiten der US-FAS üblicherweise über Punkt-zu-Punkt-Verbindungen. Eine Realisierung eines Sensor-Busses für US-FAS wäre wünschenswert, ist aber bis dato nicht bekannt. Dies liegt wohl unter anderem daran, dass ein Sensorbussystem für eines der oben beschriebenen US-FAS unter den oben genannten Randbedingungen und Anforderungen (also insbesondere die Verwendung baugleicher Sensoren, sowie deren logische und geographische Adressierung) mit zusätzlichem (HW-) Aufwand, z.B. als daisy-chain (Zusatzpin im Sensor) realisiert werden müsste und daher recht aufwändig ist.

Durch die vorliegende Erfindung wird ein System und ein Verfahren zur Adressierung einer Mehrzahl von Sende- und Empfangseinheiten einer Ultraschallabstandsmesseinrichtung geschaffen, mit welchen eine einfache Realisierung eines Sensor-Busses (z.B. LIN, PSI, ...) ermöglicht wird, und zwar unter Verwendung baugleicher Sensoren bzw. Sende- und Empfangseinheiten, welche sich lediglich durch eine während des Produktionsprozesses der Sende-und Empfangseinheiten vergebene eindeutige Kennzeichnung voneinander unterscheiden, wobei nicht bekannt ist, welche eindeutige Adressierung die im Sensor-Bus verbauten Sende- und Empfangseinheiten haben. Die Erfindung sorgt im Zusammenhang mit der eindeutigen Adressierung sowohl für eine eindeutige logische, als auch für eine eindeutige geographische Adressierung der Sende- und Empfangseinheiten im System. In Systemen mit baugleichen Sende-und Empfangseinheiten, deren logische Adressen bekannt ist, ermöglicht die Erfindung eine eindeutige geographische Adressierung der Sende- und Empfangseinheiten im System.

Wie bereits erwähnt, erhält jede Sende- und Empfangseinheit bei ihrer Produktion eine eindeutige Kennzeichnung elektronischer Natur (HW- und/oder SW-technisch realisiert). Diese eindeutige Kennzeichnung kann beispielsweise in Form einer Serien-Nummer (z.B. ein 48-Bit-Wert) vorliegen, welche die jeweilige Sende- und Empfangseinheit über den Sensor-Bus an das Steuergerät senden kann. Da in der Regel nicht bekannt ist, welche und evtl. wie viele Sende- und Empfangseinheiten im System verbaut sind, muss die eindeutige Adresse und evtl. die Anzahl der verbauten Sende- und Empfangseinheiten ermittelt werden. Diesen Vorgang nennt man "logische Adressierung". Dabei werden die einzelnen Sende- und Empfangseinheiten vom System logisch identifiziert, um später eine eindeutige Signalzuordnung der von den einzelnen Sende- und Empfangseinheiten an das Steuergerät des Systems übermittelten Signale zu den jeweils richtigen Sende- und Empfangseinheiten zu ermöglichen. Es soll also sicher gestellt werden, dass das Signal, welches von einer bestimmten Sende-und Empfangseinheit kommt, vom System auch genau dieser Sende- und Empfangseinheit zugeordnet wird, und keiner anderen Sende- und Empfangseinheit. Umgekehrt wird durch die logische Adressierung auch gewährleistet, dass Befehle vom Steuergerät des Systems an eine bestimmte Sende- und Empfangseinheit auch von genau dieser Sende- und Empfangseinheit empfangen und verarbeitet werden, und nicht von einer anderen Sende- und Empfangseinheit, für die dieser Befehl nicht bestimmt ist.

Mit der sog. "geographische Adressierung" kann über die oben erläuterte logische Adressierung hinaus beispielsweise mit jeder Sende- und Empfangseinheit ihre lokale Position im Stoßfänger verknüpft werden, und damit auch adressiert werden. Dabei ist es beispielsweise möglich, einer logischen Adresse, welche bereits einer bestimmten Sende- und Empfangseinheit zugewiesenen worden ist, eine geographische Adresse zuzuordnen. Diese geographische Adresse kann z.B. "Position 1", "Position 2", "Position 3" oder "Position 4" lauten. Über eine im Steuergerät des Systems hinterlegte Liste, welche diese geographischen Adressen mit den jeweiligen tatsächlichen lokalen Positionen im Stoßfänger verknüpft, kann dann das Steuergerät z.B. direkt die Sende- und Empfangseinheit "im hinteren Stoßfänger ganz rechts" ansprechen bzw. Signale von dieser Sende- und Empfangseinheit sofort anhand ihrer geographischen Adresse als Signale von dieser speziellen lokalen Position im Stoßfänger identifizieren. Der Ausdruck "geographische Adresse" ist jedoch nicht auf die soeben erläuterte räumliche Begrifflichkeit beschränkt. So können über die geographische Adressierung beispielsweise auch funktionale Einsatzparameter der einzelnen Sende- und Empfangseinheiten adressiert werden, wie zum Beispiel Reichweite oder Winkelbereich, oder auch logische Gruppierungen ("vorne",, "hinten") adressiert werden. Letzlich kann also unter der "geographischen Adressierung" im weitesten Sinne eine auf einer ersten logischen Adressierung aufbauende zweite (logische) Adressierung verstanden werden.

Grundgedanke der vorliegenden Erfindung ist es, die oben erläuterte Zuweisung einer eindeutigen Adresse an jede der im System verbauten Sende- und Empfangseinheiten entweder auf Grundlage eines Sendens einer oder mehrerer Sende- und Empfangseinheiten oder auf Grundlage eines Empfangens in einer oder mehrerer der Sende- und Empfangseinheiten vorzunehmen. Damit unterscheidet sich die vorliegende Erfindung von einer sog. "Echomethode", bei welcher auf das Senden eines Signals und das Empfangen desselben Signals (ggf. an einem externen Gegenstand reflektiert) abgestellt wird. Das erfindungsgemäße System bzw. Verfahren besticht daher infolge seiner gegenüber einer Echomethode geringeren Komplexität durch seine große Zuverlässigkeit und Schnelligkeit bei der eindeutigen Adressenzuweisung.

Gemäß einer ersten Ausgestaltung dieses Grundgedankens wird erfindungsgemäß ein System zur Adressierung einer Mehrzahl von Sende- und Empfangseinheiten einer Ultraschallabstandsmesseinrichtung vorgeschlagen, welches eine Adressen-Zuweisungseinrichtung zum Zuweisen einer eindeutigen Adresse an jede der Sende- und Empfangseinheiten entweder auf Grundlage eines Unterschiedes in einer Empfangseigenschaft des Empfangs von Ultraschallpulsen, welche von den Sende- und Empfangseinheiten ausgesandt werden, in einer externen Empfangseinheit, oder auf Grundlage eines Unterschiedes in einer Empfangseigenschaft der Sende- und Empfangseinheiten untereinander bezüglich der von einer externen Sendeeinheit ausgesandten Ultraschallsignale umfasst. Dabei ist es vorteilhaft, wenn das erfindungsgemäße System außerdem eine Steuerungseinheit umfasst, welche eingerichtet ist, die Sende- und Empfangseinheiten in einen Ultraschall-Sendebetrieb zu versetzen, in dem die Sende- und Empfangseinheiten in einer vorbestimmten Reihenfolge einen Ultraschallpuls aussenden, und eine externe Empfangseinheit zum Empfangen der von den Sende- und Empfangseinheiten ausgesandten Ultraschallpulse, wobei die Adressen-Zuweisungseinrichtung eingerichtet ist, jeder der Sende- und Empfangseinheiten jeweils eine eindeutige Adresse auf Grundlage eines Unterschieds in einem Empfangsparameter des Empfangs der Ultraschallpulse in dieser externen Empfangseinheit zuzuweisen.

Korrespondierend zur Ausgestaltung der Erfindung in Form eines Systems wird ein Verfahren zum Adressieren einer Mehrzahl von Sende- und Empfangseinheiten einer Ultraschallabstandsmesseinrichtung vorgeschlagen, wobei jeder der Sende- und Empfangseinheiten eine eindeutige Adresse zugewiesen wird, und zwar entweder auf Grundlage eines Unterschiedes in einer Empfangseigenschaft des Empfangs von Ultraschallpulsen, welche von den Sende- und Empfangseinheiten ausgesandt werden, in einer externen Empfangseinheit, oder auf Grundlage eines Unterschiedes in einer Empfangseigenschaft der Sendeund Empfangseinheiten untereinander bezüglich der von einer externen Sendeeinheit ausgesandten Ultraschallsignale. Vorzugsweise umfasst das Verfahren einen ersten Schritt, in dem die Sende- und Empfangseinheiten in einer vorbestimmten Reihenfolge einen Ultraschallpuls aussenden, einen zweiten Schritt, in dem die von den Sende- und Empfangseinheiten ausgesandten Ultraschallpulse in einer externen Empfangseinheit empfangen werden, und einen dritten Schritt, in dem jeder der Sende- und Empfangseinheiten jeweils eine eindeutige Adresse auf Grundlage eines Unterschieds in einem Empfangsparameter des Empfangs der Ultraschallimpulse in dieser externen Empfangseinheit zugewiesen wird.

Die oben beschriebene erfindungsgemäße Adressierung von Busteilnehmern mit Hilfe von externen Schallwandlern (d.h. Empfangseinheiten , wie z.B. Mikrofonen) oder über externe Stimulation hat mehrere Vorteile. Zum einen werden gegenüber den herkömmlich zur Datenübertragung zwischen den Sende- und Empfangseinheiten und dem Steuergerät verwendeten Punkt-zu-Punkt-Verbindungen durch Realisierung eines Sensor-Busses Leitungen im Kabelbaum des Systems eingespart. Dabei kann die Realisierung dieses Sensor-Busses ohne daisy-chain erfolgen, wodurch keine Zusatzaufwände, wie z.B. in Form eines Zusatzpins, in den Sende- und Empfangseinheiten anfallen. Diese wiederum ermöglicht vorteilhafterweise die Verwendung baugleicher Sende- und Empfangseinheiten, welche sich lediglich durch eine produktionsseitige eindeutige Kennzeichnung elektronischer Natur, beispielsweise in Form einer Serien-Nummer, voneinander unterscheiden. Zum anderen ermöglicht die erfindungsgemäße Adressierung die automatische Erkennung der Busteilnehmer sowohl bei der ersten Inbetriebnahme als auch im Reparaturfall oder bei erneuter softwaremäßiger lmplementierung des Systems. Darüber hinaus ist die erfindungsgemäße Adressierung tolerant gegenüber Störungen in der Messumgebung.

Weitere Merkmale und Vorteile von Ausführungsformen der Erfindung ergeben sich aus der nachfolgenden Beschreibung mit Bezug auf die beigefügten Figuren.

### Kurzbeschreibung der Figuren

Es zeigen:
- Fig. 1: eine schematische Darstellung des Einsatzes von Ultraschallabab- standsmesseinrichtungen an den Stoßfängerkonturen eines Fahr- zeugs;
- Fig. 2a und Fig. 2b: eine schematische Darstellung der Grundausführung des erfindungs- gemäßen Adressierungs-Systems;
- Fig. 3: eine schematische Darstellung einer vorteilhaften Ausgestaltung der Grundausführung des Systems nach Fig. 2a;
- Fig. 4: eine erste Ausführungsform der vorteilhaften Ausgestaltung des Sys- tems nach Fig. 3;
- Fig. 5: eine zweite Ausführungsform der vorteilhaften Ausgestaltung des Sys- tems nach Fig. 3;
- Fig. 6: eine dritte Ausführungsform der vorteilhaften Ausgestaltung des Sys- tems nach Fig. 3;
- Fig. 7: eine schematische Darstellung einer vorteilhaften Ausgestaltung der Grundausführung des Systems nach Fig. 2b;
- Fig. 8: eine erste Ausführungsform der vorteilhaften Ausgestaltung des Sys- tems nach Fig. 7;
- Fig. 9: eine zweite Ausführungsform der vorteilhaften Ausgestaltung des Sys- tems nach Fig. 7;
- Fig. 10: eine dritte Ausführungsform der vorteilhaften Ausgestaltung des Sys- tems nach Fig. 7;
- Fig. 11: eine vierte Ausführungsform der vorteilhaften Ausgestaltung des Sys- tems nach Fig. 7;
- Fig. 12: den Ablauf des erfindungsgemäßen Adressierungs-Verfahrens in einer ersten Variante; und
- Fig. 13: den Ablauf des erfindungsgemäßen Adressierungs-Verfahrens in einer zweiten Variante.

### Beschreibung der bevorzugten Ausführungsformen der Erfindung

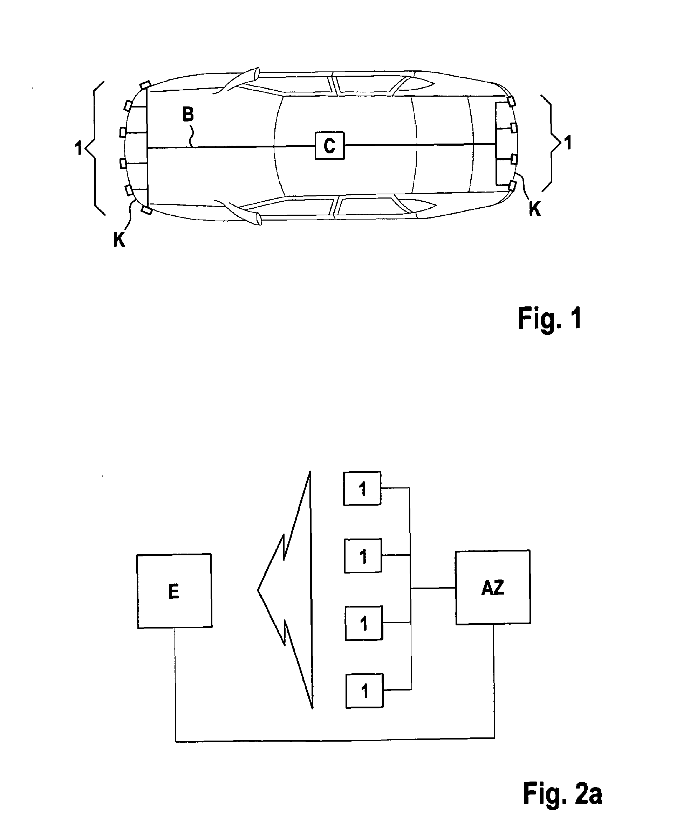

In der Fig. 1 ist ein Kraftfahrzeug dargestellt, an dessen vorderer und hinterer Stoßfängerkontur K Sende- und Empfangseinheiten 1 von Abstandsmesseinrichtungen montiert sind. Anstelle der Montage im Stoßfänger ist auch eine beliebige andere Montage der Sende- und Empfangseinheiten 1 (z.B. Ultraschallabstandssensoren) am Fahrzeug denkbar. Die Anordnung im Stoßfänger oder an der Stoßfängerkontur K bietet jedoch den Vorteil, dass zunächst die Sende- und Empfangseinheiten 1 am Stoßfänger montiert und dieser anschließend mit dem Fahrzeug verbunden werden kann.

Die Sende- und Empfangseinheiten 1 können Teil einer ultraschallbasierten Einparkhilfe (US-EPH) sein. Dieses US-EPH umfasst unter anderem ein elektronisches Steuergerät C, welches optional über CAN an Fahrzeugsignale angeschlossen ist. Die Sende- und Empfangseinheiten 1 sind über einen oder mehrere Sensor-Busse B mit dem Steuergerät C verbunden. Das Steuergerät C ist der Bus-Master und die Sende- und Empfangseinheiten 1 sind die Slaves. Das Steuergerät C ist in der Lage, die Sende- und Empfangseinheiten 1 anzusteuern und die von den Sende- und Empfangseinheiten 1 gelieferten Messergebnisse auszuwerten. Die Sende- und Empfangseinheiten 1 können durch das Steuergerät C dazu veranlasst werden, Ultraschall-Signale abzustrahlen, die von einem Hindernis reflektiert werden können. Wird ein vorbestimmter kritischer Abstandswert zu einem Hindernis unterschritten, so kann das Steuergerät C die Ausgabe einer optischen Warnung über eine Anzeige und/oder einer akustischen Warnung über einen Lautsprecher (nicht dargestellt) veranlassen.

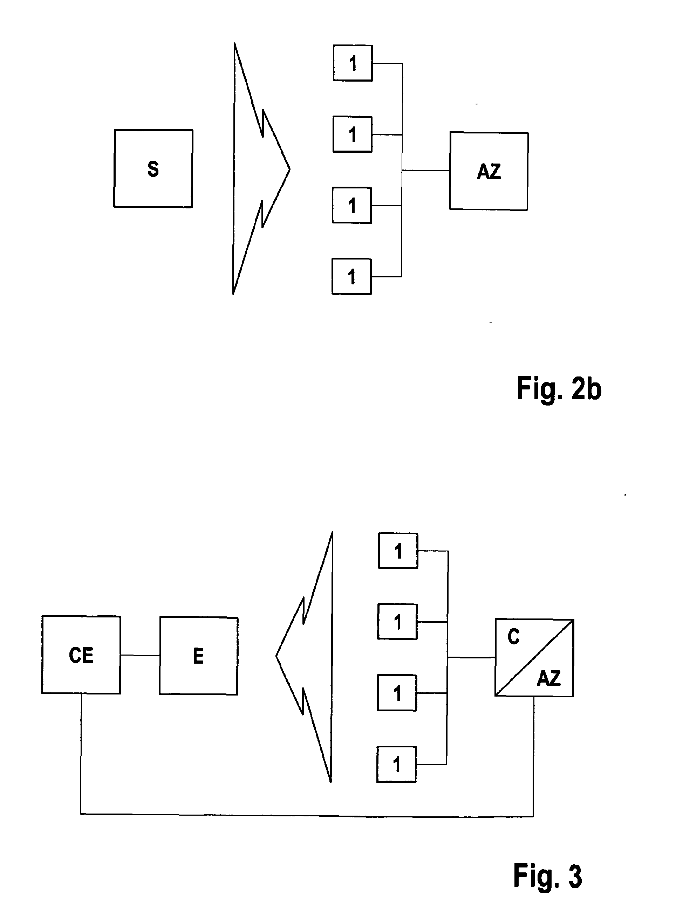

In den Figuren 2a und 2b ist eine Grundausführung des erfindungsgemäßen Adressierungs-Systems schematisch dargestellt.

Gemäß einer ersten Variante dieser Grundausführung, wie sie in Fig. 2a dargestellt ist, umfasst das System zur Adressierung einer Mehrzahl von Sende- und Empfangseinheiten 1 einer Ultraschallabstandsmesseinrichtung eine Adressen-Zuweisungseinrichtung AZ zum Zuweisen einer eindeutigen Adresse an jede der Sende- und Empfangseinheiten 1 auf Grundlage eines Unterschiedes in einer Empfangseigenschaft des Empfangs von Ultraschallpulsen, welche von den Sende- und Empfangseinheiten 1 ausgesandt werden, in einer externen Empfangseinheit E. Unter "Empfangseigenschaft des Empfangs von Ultraschallpulsen" kann jegliche Eigenschaft verstanden werden, die mit dem Empfang eines Ultraschallpulses, d.h. eines zeitlich eng begrenzten Intensitätsmaximums mit steiler Anstiegs- und Abfallflanke, in Verbindung gebracht werden kann. Dabei kann es sich beispielsweise ganz grundsätzlich um das Vorhandensein eines Empfangs handeln, oder auch das Gegenteil davon, also die Abwesenheit eines Empfangs. Eine andere Empfangseigenschaft kann der Zeitpunkt des Empfangs eines Ultraschallpulses in der externen Empfangseinheit E sein. Vorzugsweise ist der betreffende Zeitpunkt in einer über das gesamte System synchronisierten, gleichen Zeitbasis eindeutig gekennzeichnet. Eine weitere Empfangseigenschaft kann die Schalllaufzeit eines Ultraschallpulses vom Aussenden von einer der Sende- und Empfangseinheiten 1 bis zum Empfang in der externen Empfangseinheit E darstellen. Auch bei Betrachtung dieser Empfangseigenschaft empfiehlt sich die Verwendung einer über das gesamte System synchronisierten, gleichen Zeitbasis, also einer Zeitbasis, die zumindest für die Sende- und Empfangseinheiten 1 und die externe Empfangseinheit E gleich ist.

Anhand eines Unterschiedes in einer oder mehrerer dieser Empfangseigenschaften und ggf. unter Zuhilfenahme weiterer logischer (Adress-)Daten der Sende- und Empfangseinheiten 1 kann zurückgefolgert werden, welcher von der externen Empfangseinheit E empfangene Ultraschallpuls von welcher der Sende- und Empfangseinheiten 1 stammt. Die Informationen über die Empfangseigenschaften der Ultraschallpulse der einzelnen Sende- und Empfangseinheiten 1 werden von der externen Empfangseinheit E an die Adressen-Zuweisungseinrichtung AZ weitergegeben, welche aus diesen Informationen, bzw. aus dem Unterschied in diesen Informationen, für jede der Sende- und Empfangseinheiten 1 eine eigene, eindeutige Adresse generieren kann, die die Adressen-Zuweisungseinrichtung AZ dann der jeweiligen Sende- und Empfangseinheit 1 zuweisen kann.

Gemäß einer zweiten Variante dieser Grundausführung, wie sie in Fig. 2b dargestellt ist, umfasst das System zur Adressierung einer Mehrzahl von Sende- und Empfangseinheiten 1 einer Ultraschallabstandsmesseinrichtung eine Adressen-Zuweisungseinrichtung AZ zum Zuweisen einer eindeutigen Adresse an jede der Sende- und Empfangseinheiten 1 auf Grundlage eines Unterschiedes in einer Empfangseigenschaft der Sende- und Empfangseinheiten 1 untereinander bezüglich der von einer externen Sendeeinheit S ausgesandten Ultraschallsignale. Für den Begriff "Empfangseigenschaft" gilt in entsprechender Weise das für die erste Variante bereits Erwähnte. Auch in der zweiten Variante kann anhand eines Unterschiedes in einer oder mehrerer dieser Empfangseigenschaften und ggf. unter Zuhilfenahme weiterer logischer (Adress-)Daten der Sende- und Empfangseinheiten 1 zurückgefolgert werden, wie die empfangenden Sende- und Empfangseinheiten 1 zueinander angeordnet sind. Aus dieser Information kann für jede der Sende- und Empfangseinheiten 1 eine eigene, eindeutige Adresse generiert werden, die die Adressen-Zuweisungseinrichtung AZ dann der jeweiligen Sende- und Empfangseinheit 1 zuweisen kann.

Fig. 3 zeigt eine schematische Darstellung einer vorteilhaften Ausgestaltung der Grundausführung des Systems nach Fig. 2a. In diesem System ist zusätzlich eine Steuerungseinheit C vorgesehen, welche eingerichtet ist, die Sende- und Empfangseinheiten 1 in einen Ultraschall-Sendebetrieb zu versetzen, in dem die Sende- und Empfangseinheiten 1 in einer vorbestimmten Reihenfolge einen Ultraschallpuls aussenden, sowie eine externe Empfangseinheit E zum Empfangen der von den Sende- und Empfangseinheiten 1 ausgesandten Ultraschallpulse. Die Adressen-Zuweisungseinrichtung AZ ist eingerichtet, jeder der Sende- und Empfangseinheiten 1 jeweils eine eindeutige Adresse auf Grundlage eines Unterschieds in einem Empfangsparameter des Empfangs der Ultraschallpulse in dieser externen Empfangseinheit E zuzuweisen. Die externe Empfangseinheit E ist an eine externe Auswerteeinheit CE gekoppelt, welche geeignet ist, die Empfangsparameter des Empfangs der Ultraschallpulse auszuwerten und das Ergebnis der Auswertung und/oder die der Auswertung zugrunde liegenden Rohdaten an die Adressen-Zuweisungseinrichtung AZ oder die Steuerungseinheit C weiterzugeben.

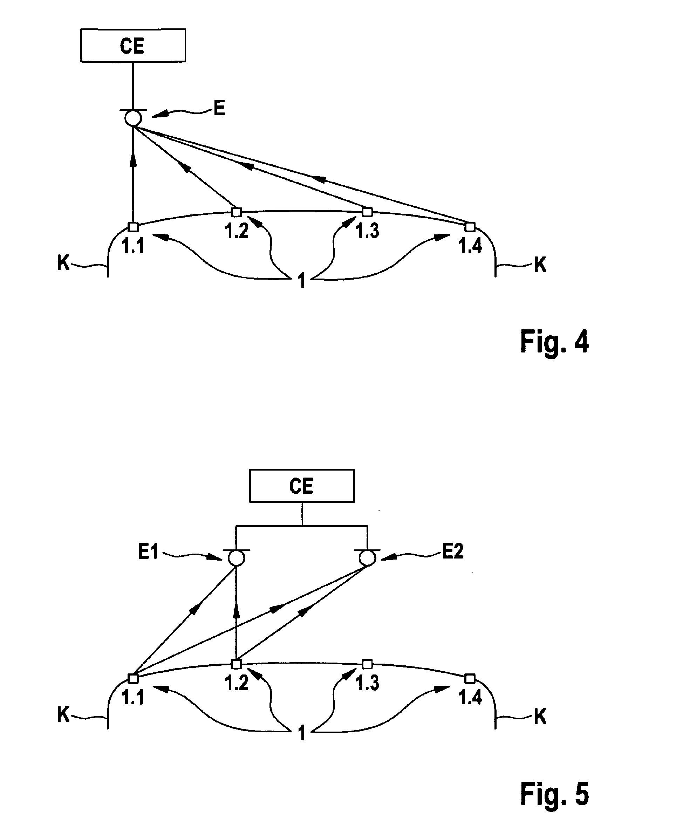

Die nachfolgend beschriebenen Ausführungsformen der Figuren 4, 5 und 6 zielen insbesondere auf die geographische Adressierung von Busteilnehmern (= Sende- und Empfangseinheiten 1) mit Hilfe von externen Schallwandlern (d.h. Empfangseinheiten, wie z.B. Mikrofonen) ab. Diese Ausführungsformen dienen vorrangig, aber nicht ausschließlich, der Realisierung eines Sensor-Busses B (z.B. LIN, PSI, ...) mit baugleichen Sende- und Empfangseinheiten 1, deren logische Adresse bekannt ist. Dabei ermöglichen diese Ausführungsformen eine eindeutige geographische Adressierung der Sende- und Empfangseinheiten 1 im System. Dadurch kann beispielsweise bei bekannten logischen Adressen der verbauten Sendeund Empfangseinheiten 1 ermittelt werden, an welcher Position im Stoßfänger K die jeweilige Sende- und Empfangseinheit angeordnet ist.

Fig. 4 zeigt eine erste Ausführungsform der vorteilhaften Ausgestaltung des Systems nach Fig. 3. Bei dieser Ausführungsform liegt die externe Empfangseinheit E in Form eines einzigen ultraschallempfindlichen Mikrofons E vor. Das Mikrofon E weist vorzugsweise zu jeder der Sende- und Empfangseinheiten 1.1, 1.2, 1.3, 1.4 einen unterschiedlichen Abstand auf, so dass sich die absoluten Schalllaufzeiten der Ultraschallpulse von den einzelnen Sendeund Empfangseinheiten 1.1, 1.2, 1.3, 1.4 zum Mikrofon E voneinander unterscheiden. Die Sende- und Empfangseinheiten 1.1, 1.2, 1.3, 1.4 werden von der Steuerungseinheit C (nicht dargestellt) in einer bestimmten Reihenfolge aufgefordert, einen Ultraschallpuls auszusenden. Die verschiedenen Ultraschallpulse werden im Mikrofon E empfangen. In der externen Auswerteeinheit CE werden die Schalllaufzeiten der Ultraschallpulse vom jeweiligen Aussendezeitpunkt an der jeweiligen Sende- und Empfangseinheit 1.1, 1.2, 1.3, 1.4 bis zu deren Empfang am Mikrofon E gemessen. Durch Auswertung der absoluten Laufzeiten kann - vorzugsweise mit Hilfe der externen Auswerteeinheit CE - nach einem kompletten Sendezyklus aller Sende- und Empfangseinheiten 1.1, 1.2, 1.3, 1.4 eindeutig die Position der Sende- und Empfangseinheiten im Stoßfänger K ermittelt werden. Dabei ist es besonders vorteilhaft, wenn die relative Lage der möglichen Einbaupositionen der Sende- und Empfangseinheiten 1 im Stoßfänger K zu dem Mikrofon E zumindest näherungsweise bekannt ist.

Fig. 5 zeigt eine zweite Ausführungsform der vorteilhaften Ausgestaltung des Systems nach Fig. 3. Bei diesem alternativen Aufbau des Systems werden zwei Mikrofone E1, E2 verwendet. Wie schon bei der ersten Ausführungsform beschrieben, fordert auch hier die Steuerungseinheit C (nicht dargestellt) die Sende- und Empfangseinheiten 1.1, 1.2, 1.3, 1.4 auf, in einer bestimmten Reihenfolge einen Ultraschallpuls auszusenden. In der externen Auswerteeinheit CE werden die Schalllaufzeiten der Ultraschallpulse vom jeweiligen Aussendezeitpunkt an der jeweiligen Sende- und Empfangseinheit 1.1, 1.2, 1.3, 1.4 bis zu deren Empfang am jeweiligen Mikrofon E1, E2 gemessen. Durch Auswertung der absoluten Schalllaufzeiten und/oder der Laufzeitunterschiede zwischen den beiden Mikrofonen E1, E2 kann - wiederum vorzugsweise mit Hilfe der externen Auswerteeinheit CE - nach einem kompletten Sendezyklus aller Sende- und Empfangseinheiten 1.1, 1.2, 1.3, 1.4 eindeutig die Position der Sende- und Empfangseinheiten im Stoßfänger K ermittelt werden. Auch hier ist es besonders vorteilhaft, wenn die relative Lage der möglichen Einbaupositionen der Sende- und Empfangseinheiten 1 im Stoßfänger K zu den Mikrofonen E1, E2 zumindest näherungsweise bekannt ist.

Eine zur Fig.5 analoge Verwendung von drei oder noch mehr Mikrofonen E1, E2, E3,..., En ist ebenfalls denkbar. All diesen zur Fig. 5 analogen Ausführungsformen ist gemein, dass die Adressenzuweisung aufgrund der absoluten Schalllaufzeiten der Ultraschallpulse von den einzelnen Sende- und Empfangseinheiten 1 zu den Mikrofonen En und/oder aufgrund von Laufzeitunterschieden zumindest eines Ultraschallpulses von einer der Sende- und Empfangseinheiten 1 zu den Mikrofonen En erfolgt.

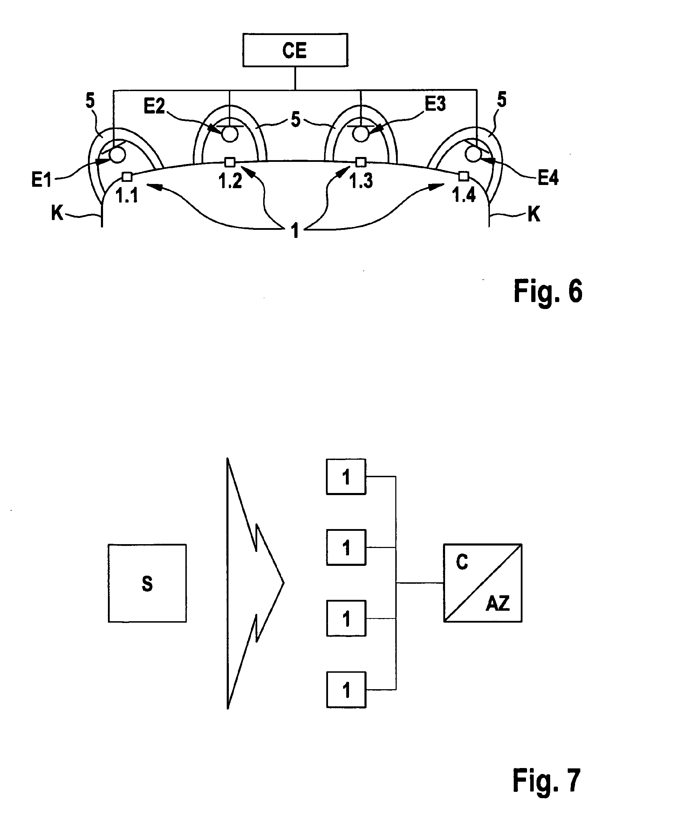

Fig. 6 zeigt eine dritte Ausführungsform der vorteilhaften Ausgestaltung des Systems nach Fig. 3. Bei dieser Ausführungsform umfasst die externe Empfangseinheit E mehrere ultraschallempfindliche Mikrofone E1, E2, E3, E4, von denen je eines jeder der Sende- und Empfangseinheiten 1.1, 1.2, 1.3, 1.4 zugeordnet ist, und wobei die auf diese Weise gebildeten Paare aus Mikrofon und Sende- und Empfangseinheit voneinander schallentkoppelt 5 sind. Es wird hier also vor einem Stoßfänger K mit darin verbauten Sende- und Empfangseinheiten 1 vor jeder der Sende- und Empfangseinheiten 1.1, 1.2, 1.3, 1.4 ein Mikrofon E1, E2, E3, E4 positioniert. Darüber hinaus wird über schalldämpfende, vorzugsweise schallisolierende Mittel 5 sichergestellt, dass die jeweilige Paarung aus Sende- und Empfangseinheit und Mikrofon von den anderen Sende- und Empfangseinheiten nicht - oder zumindest nur unter einem Schwellpegel der Sende- und Empfangseinheiten 1 - mit Ultraschall beaufschlagt wird. Bei bekannter logischer Adresse der Sende- und Empfangseinheiten 1 kann die Steuerungseinheit C (nicht dargestellt) die Sende- und Empfangseinheiten 1 in einer bestimmten Reihenfolge zum Aussenden eines Ultraschallpulses auffordern. Das der sendenden Sendeund Empfangseinheit gegenüberliegende Mikrofon empfängt diesen Ultraschallpuls. Aufgrund der festen Zuordnung der jeweiligen Sende- und Empfangseinheit zu ihrem Mikrofon kann bei Detektion eines Empfangs im jeweiligen Mikrofon auf die Position der entsprechenden Sende- und Empfangseinheit geschlossen werden. Vorzugsweise über die externe Auswerteeinheit CE wird diese Position an die Steuerungseinheit C gemeldet. Über diese Systemanordnung kann die geographische Adresse aller Sende- und Empfangseinheiten 1 bestimmt werden.

Fig. 7 zeigt eine schematische Darstellung einer vorteilhaften Ausgestaltung der Grundausführung des Systems nach Fig. 2b. In diesem System ist zusätzlich eine Steuerungseinheit C vorgesehen, welche eingerichtet ist, die Sende- und Empfangseinheiten 1 in reinen Ultraschall-Empfangsbetrieb zu versetzen. Ferner ist eine externe Sendeeinheit S zum Beaufschlagen der Sende- und Empfangseinheiten 1 mit Ultraschallsignalen vorgesehen. Die Adressen-Zuweisungseinrichtung AZ ist eingerichtet, einer ersten der Sende- und Empfangseinheiten 1 eine eindeutige Adresse auf Grundlage einer Empfangseigenschaft in dieser ersten Sende- und Empfangseinheit 1 bezüglich der von der externen Sendeeinheit S ausgesandten Ultraschallsignale zuzuweisen, wobei sich die Empfangseigenschaft dieser ersten Sende- und Empfangseinheit 1 in einem bestimmten Zeitintervall von der Empfangseigenschaft zumindest derjenigen Sende- und Empfangseinheiten 1 unterscheidet, welchen noch keine eindeutige Adresse zugewiesen wurde. Die Empfangseigenschaften des Empfangs der Ultraschallpulse werden von der Steuerungseinheit C ausgewertet und das Ergebnis der Auswertung wird der Adressen-Zuweisungseinrichtung AZ zur Verfügung gestellt.

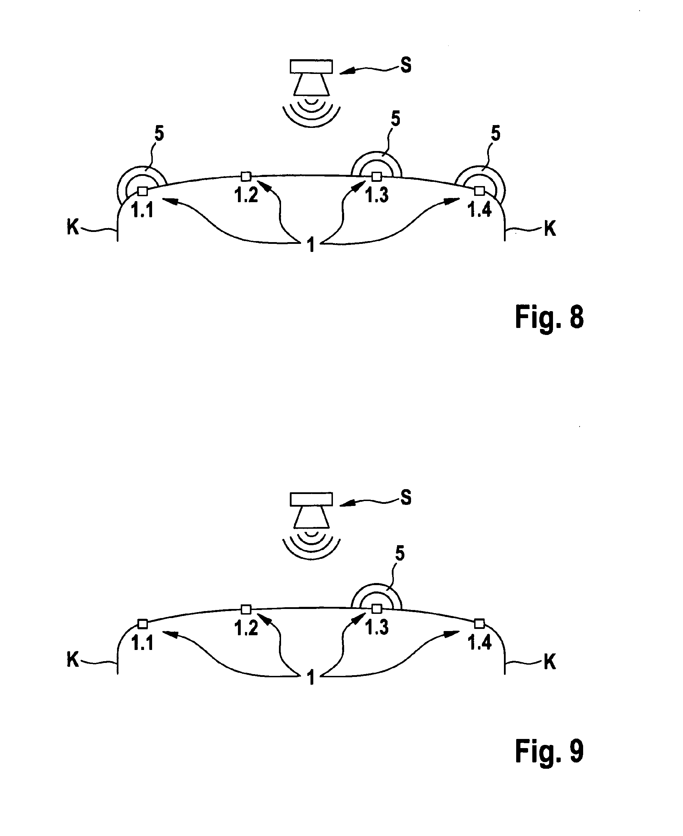

Die nachfolgend beschriebenen Ausführungsformen der Figuren 8, 9, 10 und 11 zielen insbesondere auf die Adressierung von Busteilnehmern (= Sende- und Empfangseinheiten 1) über externe Stimulation durch akustische Störquellen oder Schallquellen ab.

Die Ausführungsformen der Figuren 8 und 9 dienen vorrangig der Realisierung eines Sensor-Busses B (z.B. LIN, PSI, ...) mit baugleichen Sende- und Empfangseinheiten 1, die sich lediglich durch eine produktionsseitige eindeutige Kennzeichnung elektronischer Natur, beispielsweise in Form einer Serien-Nummer, voneinander unterscheiden. Dabei ist nicht bekannt, welche eindeutige Adresse die im Sensor-Bus B verbauten Sende- und Empfangseinheiten 1 haben. Die Ausführungsformen der Figuren 8 und 9 ermöglichen hierbei eine eindeutige logische und geographische Adressierung der Sende- und Empfangseinheiten 1 im System. Da nicht bekannt ist, welche und ggf. wie viele Sende- und Empfangseinheiten 1 im System verbaut sind, muss die Anzahl und die eindeutige Adresse der verbauten Sendeund Empfangseinheiten 1 ermittelt werden. Dies wird in den Ausführungsformen der Figuren 8 und 9 erreicht, indem sich die Sende- und Empfangseinheiten 1 durch ein externes Ereignis getriggert mit zeitlichem Versatz am Sensor-Bus B anmelden. Eine geographische Adressierung ist möglich, wenn der externe Trigger in einer bestimmten Reihenfolge erfolgt.

Fig. 8 zeigt eine erste Ausführungsform der vorteilhaften Ausgestaltung des Systems nach Fig. 7. Bei dieser Ausführungsform ist aufgrund von Schallabschirmung 5 jeder Sende- und Empfangseinheit 1.1, 1.3, 1.4 außer der ersten Sende- und Empfangseinheit 1.2 in dem bestimmten Zeitintervall nur diese erste Sende- und Empfangseinheit 1.2 in der Lage, die Ultraschallsignale von der externen Sendeeinheit S zu empfangen. Dabei wird vor einem Stoßfänger K mit verbauten Sende- und Empfangseinheiten 1 eine akustische Störquelle S positioniert, welche konstant Ultraschall aussendet. Über schalldämpfende bzw. schallisolierende Maßnahmen 5 (siehe oben) werden zunächst alle Sende- und Empfangseinheiten 1 mit schallabsorbierendem Material 5 abgeschirmt. Während einer Initialisierungsphase versetzt die Steuerungseinheit C (nicht dargestellt) die Sende- und Empfangseinheiten 1 in reinen Ultraschall-Empfangsbetrieb. Dann wird mit zeitlichem Versatz bei jeweils einer der Sendeund Empfangseinheiten 1 die Schallabschirmung 5 entfernt. Jeweils diejenige Sende- und Empfangseinheit 1, welche die Ultraschallstörung detektiert, sendet ihre produktionsseitige, eindeutige Kennzeichnung elektronischer Natur, beispielsweise ihre Serien-Nummer, an die Steuerungseinheit C. Hierüber kann die Steuerungseinheit C den Sende- und Empfangseinheiten 1 eindeutige logische Adressen zuordnen. Jede Sende- und Empfangseinheit 1 nimmt während der Initialisierungsphase so lange nicht an der Buskommunikation teil, wie sie keine Ultraschallstörung detektiert.

Wenn die Schallabschirmungen 5 in vorteilhafter Weise in einer definierten Reihenfolge entfernt werden und diese Reihenfolge der Steuerungseinheit C bekannt ist, kann die Steuerungseinheit C anhand der Reihenfolge, in der die Sende- und Empfangseinheiten 1 ihre produktionsseitige, eindeutige Kennzeichnung übermitteln, die Position der Sende- und Empfangseinheiten 1 im Stoßfänger K bestimmen. Somit ist mit dieser Systemanordnung auch eine geographische Adressierung möglich. Optional ist es auch möglich, Sende- und Empfangseinheiten 1 ohne eindeutige Kennzeichnung zu verbauen. In diesem Fall würde die Steuerungseinheit C jeweils der Sende- und Empfangseinheit 1 eine entsprechende logische Adresse zuweisen, der gerade oder als nächster die Ultraschallstörung empfängt. Die entsprechende Sende- und Empfangseinheit 1 speichert die zugeordnete logische Adresse und ist darüber eindeutig logisch und geographisch adressiert.

Fig. 9 zeigt eine zweite Ausführungsform der vorteilhaften Ausgestaltung des Systems nach Fig. 7. Bei diesem alternativen Aufbau des Systems ist aufgrund von Schallabschirmung 5 der ersten Sende- und Empfangseinheit 1.3 in dem bestimmten Zeitintervall nur diese erste Sende- und Empfangseinheit 1.3 nicht in der Lage, die Ultraschallsignale von der externen Sendeeinheit S zu empfangen. Dabei wird ähnlich wie bei der ersten Ausführungsform gemäß Fig. 8 vor einem Stoßfänger K mit verbauten Sende- und Empfangseinheiten 1 eine akustische Störquelle S positioniert, welche konstant Ultraschall aussendet. Diesmal ist allerdings zunächst keine der Sende- und Empfangseinheiten 1 mit schallisolierendem Material 5 abgeschirmt. Während einer Initialisierungsphase versetzt die Steuerungseinheit C (nicht dargestellt) die Sende- und Empfangseinheiten 1 in reinen Empfangsbetrieb. Dann wird mit zeitlichem Versatz jeweils eine der Sende- und Empfangseinheiten 1 mit schallisolierendem Material 5 abgeschirmt. Jeweils diejenige Sende- und Empfangseinheit 1, die keine Ultraschallstörung detektiert, sendet ihre eindeutige Kennzeichnung an die Steuerungseinheit C. Hierüber kann die Steuerungseinheit C den Sende- und Empfangseinheiten 1 logische Adressen zuordnen. Wenn die Schallabschirmung 5 in vorteilhafter Weise in einer definierten Reihenfolge auf den Sende- und Empfangseinheiten 1 angebracht wird, und diese Reihenfolge der Steuerungseinheit C bekannt ist, kann die Steuerungseinheit C anhand der Reihenfolge, in der die Sende- und Empfangseinheiten 1 ihre produktionsseitige, eindeutige Kennzeichnung übermitteln, die Position der Sende- und Empfangseinheiten 1 im Stoßfänger K bestimmen. Somit ist auch bei diesem alternativen Aufbau des Systems eine geographische Adressierung möglich.

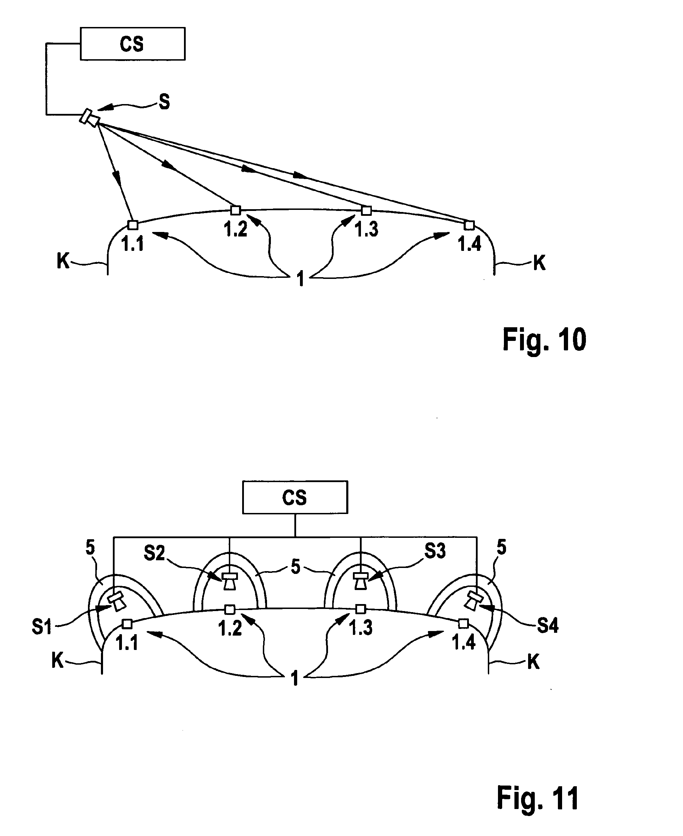

Die Ausführungsform der Fig. 10 dient vorrangig der Realisierung eines Sensor-Busses B mit baugleichen Sende- und Empfangseinheiten 1, die sich durch eine produktionsseitige eindeutige Kennzeichnung elektronischer Natur, beispielsweise in Form einer Serien-Nummer, voneinander unterscheiden, wobei zusätzlich die logischen Adressen der verbauten Sendeund Empfangseinheiten 1 bekannt sind. Die Ausführungsform der Fig. 10 ermöglicht in diesem Fall eine eindeutige geographische Adressierung der Sende- und Empfangseinheiten 1 im System. Dadurch kann beispielsweise ermittelt werden, an welcher Position im Stoßfänger K die jeweilige Sende- und Empfangseinheit angeordnet ist.

Fig. 10 zeigt eine dritte Ausführungsform der vorteilhaften Ausgestaltung des Systems nach Fig. 7. Bei dieser Ausführungsform liegt die externe Sendeeinheit S in Form einer einzigen Ultraschallquelle S vor, welche zu jeder der Sende- und Empfangseinheiten 1.1, 1.2, 1.3, 1.4 einen unterschiedlichen Abstand aufweist, so dass sich aufgrund der Laufzeitunterschiede eines von der Ultraschallquelle S ausgesandten Ultraschallpulses zu den Sende- und Empfangseinheiten 1.1, 1.2, 1.3, 1.4 die Zeitpunkte des Empfangs des Ultraschallpulses in den Sende- und Empfangseinheiten voneinander unterscheiden. Wenn von der Schallquelle S ein Ultraschallpuls ausgesendet wird, kann über den Laufzeitunterschied, bis der Schall von der jeweiligen Sende- und Empfangseinheit 1 empfangen wird, die entsprechende geographische Position im Stoßfänger K bestimmte werden. Hierfür ist es vorteilhaft, dass die Steuerungseinheit C (nicht dargestellt) alle Sende- und Empfangseinheiten 1 gleichzeitig in Empfangsmodus versetzt, und besonders vorteilhaft zum Zeitpunkt der Ultraschallaussendung. Auf Anfrage melden dann die Sende- und Empfangseinheiten 1 die Empfangszeitpunkte des Ultraschallpulses zurück. Über die Laufzeitunterschiede kann die Steuerungseinheit C die geographische Adressierung vornehmen.

Die Ausführungsform der Fig. 11 dient vorrangig der Realisierung eines Sensor-Busses B mit baugleichen Sende- und Empfangseinheiten 1, die sich lediglich durch eine produktionsseitige eindeutige Kennzeichnung elektronischer Natur, beispielsweise in Form einer Serien-Nummer, voneinander unterscheiden. Dabei ist nicht bekannt, welche eindeutige Adresse die im Sensor-Bus B verbauten Sende- und Empfangseinheiten 1 haben. Die Ausführungsform der Fig. 11 ermöglicht hierbei eine eindeutige logische und geographische Adressierung der Sende- und Empfangseinheiten 1 im System. Da nicht bekannt ist, welche und ggf. wie viele Sende- und Empfangseinheiten 1 im System verbaut sind, muss die Anzahl und die eindeutige Adresse der verbauten Sende- und Empfangseinheiten 1 ermittelt werden.

Fig. 11 zeigt eine vierte Ausführungsform der vorteilhaften Ausgestaltung des Systems nach Fig. 7. Bei dieser Ausführungsform umfasst die externe Sendeeinheit S mehrere Ultraschallquellen S1, S2, S3, S4, von denen je eine jeder der Sende- und Empfangseinheiten 1.1, 1.2, 1.3, 1.4 zugeordnet ist. Die auf diese Weise gebildeten Paare aus Ultraschallquelle und Sende- und Empfangseinheit sind voneinander schallentkoppelt 5. Während einer Initialisierungsphase versetzt die Steuerungseinheit C (nicht dargestellt) die Sende- und Empfangseinheiten 1 in reinen Ultraschall-Empfangsbetrieb. Über eine entsprechende externe Steuerung CS wird von den Schallquellen S1, S2, S3, S4 mit einem definierten zeitlichen Versatz Ultraschall ausgesendet. Jeweils diejenige Sende- und Empfangseinheit 1, die Ultraschall empfängt, sendet ihre eindeutige fabrikseitige Kennzeichnung (z.B. Serien-Nummer) an die Steuerungseinheit C. Hierüber kann die Steuerungseinheit C den Sende- und Empfangseinheiten 1 logische Adressen zuordnen. Solange die Sende- und Empfangseinheiten 1 keinen Ultraschall empfangen, nehmen sie nicht an der Buskommunikation teil.

Wenn von den Schallquellen S1, S2, S3, S4 in vorteilhafter Weise Ultraschall in einer definierten Reihenfolge ausgesendet wird, und diese Reihenfolge der Steuerungseinheit C bekannt ist, kann die Steuerungseinheit C anhand der Reihenfolge, in der die Sensoren ihre eindeutige fabrikseitige Kennzeichnung übermitteln, die Position der Sende- und Empfangseinheiten 1 im Stoßfänger K bestimmen. Somit ist bei diesem Aufbau des Systems auch eine geographische Adressierung möglich. Alternativ ist es auch möglich, Sende- und Empfangseinheiten 1 ohne eindeutige Kennzeichnung zu verbauen. In diesem Fall würde die Steuerungseinheit C jeweils der Sende- und Empfangseinheit 1 eine entsprechende logische Adresse zuweisen, der gerade oder als nächster die Ultraschallstörung empfängt. Die entsprechende Sende- und Empfangseinheit 1 speichert die zugeordnete logische Adresse und ist darüber eindeutig logisch und geographisch adressiert.

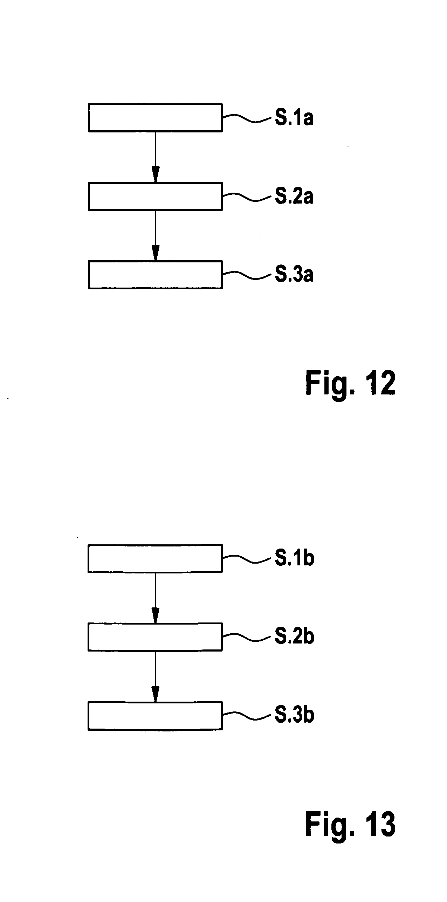

Fig. 12 zeigt den Ablauf des erfindungsgemäßen Adressierungs-Verfahrens in einer ersten Variante. Dieses Verfahren umfasst einen ersten Schritt S.1a, in dem die Sende- und Empfangseinheiten 1 in einer vorbestimmten Reihenfolge einen Ultraschallpuls aussenden, einen zweiten Schritt S.2a, in dem die von den Sende- und Empfangseinheiten 1 ausgesandten Ultraschallpulse in einer externen Empfangseinheit E empfangen werden, und einen dritten Schritt S.3a, in dem jeder der Sende- und Empfangseinheiten 1 jeweils eine eindeutige Adresse auf Grundlage eines Unterschieds in einem Empfangsparameter des Empfangs der Ultraschallimpulse in dieser externen Empfangseinheit E zugewiesen wird.

Fig. 13 zeigt den Ablauf des erfindungsgemäßen Adressierungs-Verfahrens in einer zweiten Variante. Dieses Verfahren umfasst einen ersten Schritt S.1b, in welchem die Sende- und Empfangseinheiten 1 in reinen Ultraschall-Empfangsbetrieb versetzt werden, einen zweiten Schritt S.2b, in welchem die Sende- und Empfangseinheiten 1 von einer externen Sendeeinheit S mit Ultraschallsignalen beaufschlagt werden, und einen dritten Schritt S.3b, in welchem einer ersten der Sende- und Empfangseinheiten 1 eine eindeutige Adresse auf Grundlage einer Empfangseigenschaft in dieser ersten Sende- und Empfangseinheit 1 bezüglich der von der externen Sendeeinheit S ausgesandten Ultraschallsignale zugewiesen wird, wobei sich die Empfangseigenschaft dieser ersten Sende- und Empfangseinheit 1 in einem bestimmten Zeitintervall von der Empfangseigenschaft zumindest derjenigen Sende- und Empfangseinheiten 1 unterscheidet, welchen noch keine eindeutige Adresse zugewiesen wurde.

Was die bevorzugten Ausgestaltungen des dritten Schrittes S.3a, S.3b dieser beiden Verfahrensalternativen anbelangt, wie sie in den abhängigen Verfahrensansprüchen wiedergegeben sind, so finden diese Verfahrensmerkmale ihre sinngemäße Entsprechung in den oben erläuterten Merkmalen der Ausführungsformen des erfindungsgemäßen Systems zur Adressierung einer Mehrzahl von Sende- und Empfangseinheiten einer Ultraschallabstandsmesseinrichtung. Aus diesem Grund wird auf eine Wiederholung der Zusammenhänge und Vorteile dieser Merkmale verzichtet und stattdessen explizit auf die obigen Erläuterungen im Zusammenhang mit den Ausgestaltungen des erfindungsgemäßen Systems verwiesen.

Die Bezugszeichen und Verweise auf Figuren in den nachfolgenden Patentansprüchen dienen ausschließlich der leichteren Orientierung in den Anmeldungsunterlagen und sind in keinem Fall in einer Weise zu verstehen, welche den Anspruchsgegenstand auf eine in den Figuren gezeigte oder in der Beschreibung dargelegte Ausführungsform beschränkt.

## Patentansprüche

1. System zur Adressierung einer Mehrzahl von Sende- und Empfangseinheiten (1, 1.1, 1.2, 1.3, 1.4) einer Ultraschallabstandsmesseinrichtung, umfassend eine Adressen-Zuweisungseinrichtung (AZ) zum Zuweisen einer eindeutigen Adresse an jede der Sende- und Empfangseinheiten (1), **dadurch gekennzeichnet, dass** die Zuweisung einer eindeutigen Adresse an jede der Sende- und Empfangseinheiten (1) entweder (Figur 2a) auf Grundlage eines Unterschiedes in einer Empfangseigenschaft des Empfangs von Ultraschallpulsen erfolgt, welche von den Sende- und Empfangseinheiten (1) ausgesandt werden, in einer externen Empfangseinheit (E, E1, E2, E3, E4), oder (Figur 2b) auf Grundlage eines Unterschiedes in einer Empfangseigenschaft der Sende- und Empfangseinheit (1) untereinander bezüglich der von einer externen Sendeeinheit (S, S1, S2, S3, S4) ausgesandten Ultraschallsignale.

2. System nach Anspruch 1, ferner umfassend:
eine Steuerungseinheit (C), welche eingerichtet ist, die Sende- und Empfangseinheiten (1) in einen Ultraschall-Sendebetrieb zu versetzen, in dem die Sende- und Empfangseinheiten (1) in einer vorbestimmten Reihenfolge einen Ultraschallpuls aussenden, und
eine externe Empfangseinheit (E) zum Empfangen der von den Sende- und Empfangseinheiten (1) ausgesandten Ultraschallpulse,
wobei die Adressen-Zuweisungseinrichtung (AZ) eingerichtet ist, jeder der Sende- und Empfangseinheiten (1) jeweils eine eindeutige Adresse auf Grundlage eines Unterschieds in einem Empfangsparameter des Empfangs der Ultraschallpulse in dieser externen Empfangseinheit (E) zuzuweisen (Fig. 3).

3. System nach Anspruch 2, wobei die externe Empfangseinheit (E) in Form eines einzigen ultraschallempfindlichen Mikrofons (E) vorliegt, welches zu jeder der Sende- und Empfangseinheiten (1.1, 1.2, 1.3, 1.4) einen unterschiedlichen Abstand aufweist, so dass sich die absoluten Schalllaufzeiten der Ultraschallpulse von den einzelnen Sendeund Empfangseinheiten (1.1, 1.2, 1.3, 1.4) zum Mikrofon (E) voneinander unterscheiden (Fig. 4).

4. System nach Anspruch 2, wobei die externe Empfangseinheit (E) mehrere ultraschallempfindliche Mikrofone (E1, E2) umfasst, und wobei die Adressenzuweisung aufgrund der absoluten Schalllaufzeiten der Ultraschallpulse von den einzelnen Sende- und Empfangseinheiten (1.1, 1.2, 1.3, 1.4) zu den Mikrofonen (E1, E2) und/oder aufgrund von Laufzeitunterschieden zumindest eines Ultraschallpulses von einer der Sende- und Empfangseinheiten (1) zu den Mikrofonen (E1, E2) erfolgt (Fig. 5).

5. System nach Anspruch 2, wobei die externe Empfangseinheit (E) mehrere ultraschallempfindliche Mikrofone (E1, E2, E3, E4) umfasst, von denen je eines jeder der Sendeund Empfangseinheiten (1.1, 1.2, 1.3, 1.4) zugeordnet ist, und wobei die auf diese Weise gebildeten Paare aus Mikrofon und Sende- und Empfangseinheit voneinander schallentkoppelt (5) sind (Fig. 6).

6. System nach Anspruch 1, ferner umfassend:
eine Steuerungseinheit (C), welche eingerichtet ist, die Sende- und Empfangseinheiten (1) in reinen Ultraschall-Empfangsbetrieb zu versetzen, und
eine externe Sendeeinheit (S) zum Beaufschlagen der Sende- und Empfangseinheiten (1) mit Ultraschallsignalen,
wobei die Adressen-Zuweisungseinrichtung (AZ) eingerichtet ist, einer ersten der Sende- und Empfangseinheiten (1) eine eindeutige Adresse auf Grundlage einer Empfangseigenschaft in dieser ersten Sende- und Empfangseinheit (1) bezüglich der von der externen Sendeeinheit (S) ausgesandten Ultraschallsignale zuzuweisen, wobei sich die Empfangseigenschaft dieser ersten Sende- und Empfangseinheit (1) in einem bestimmten Zeitintervall von der Empfangseigenschaft zumindest derjenigen Sendeund Empfangseinheiten (1) unterscheidet, welchen noch keine eindeutige Adresse zugewiesen wurde (Fig. 7).

7. System nach Anspruch 6, wobei aufgrund von Schallabschirmung (5) jeder Sende- und Empfangseinheit (1.1, 1.3, 1.4) außer der ersten Sende- und Empfangseinheit (1.2) in dem bestimmten Zeitintervall nur diese erste Sende- und Empfangseinheit (1.2) in der Lage ist, die Ultraschallsignale von der externen Sendeeinheit (S) zu empfangen (Fig. 8).

8. System nach Anspruch 6, wobei aufgrund von Schallabschirmung (5) der ersten Sende- und Empfangseinheit (1.3) in dem bestimmten Zeitintervall nur diese erste Sendeund Empfangseinheit (1.3) nicht in der Lage ist, die Ultraschallsignale von der externen Sendeeinheit (S) zu empfangen (Fig. 9).

9. System nach Anspruch 6, wobei die externe Sendeeinheit (S) in Form einer einzigen Ultraschallquelle (S) vorliegt, welche zu jeder der Sende- und Empfangseinheiten (1.1, 1.2, 1.3, 1.4) einen unterschiedlichen Abstand aufweist, so dass sich aufgrund der Laufzeitunterschiede eines von der Ultraschallquelle (S) ausgesandten Ultraschallpulses zu den Sende- und Empfangseinheiten (1.1, 1.2, 1.3, 1.4) die Zeitpunkte des Empfangs des Ultraschallpulses in den Sende- und Empfangseinheiten (1.1, 1.2, 1.3, 1.4) voneinander unterscheiden (Fig. 10).

10. System nach Anspruch 6, wobei die externe Sendeeinheit (S) mehrere Ultraschallquellen (S1, S2, S3, S4) umfasst, von denen je eine jeder der Sende- und Empfangseinheiten (1.1, 1.2, 1.3, 1.4) zugeordnet ist, und wobei die auf diese Weise gebildeten Paare aus Ultraschallquelle und Sende- und Empfangseinheit voneinander schallentkoppelt (5) sind (Fig. 11).

11. Verfahren zum Adressieren einer Mehrzahl von Sende- und Empfangseinheiten (1, 1.1, 1.2, 1.3, 1.4) einer Ultraschallabstandsmesseinrichtung, wobei jeder der Sende- und Empfangseinheiten (1) eine eindeutige Adresse zugewiesen wird, **dadurch gekennzeichnet, dass** die Zuweisung jeder der Sende- und Empfangseinheiten (1) einer eindeutigen Adresse entweder auf Grundlage eines Unterschiedes in einer Empfangseigenschaft des Empfangs von Ultraschallpulsen erfolgt, welche von den Sende- und Empfangseinheiten (1) ausgesandt werden, in einer externen Empfangseinheit (E), oder auf Grundlage eines Unterschiedes in einer Empfangseigenschaft der Sende- und Empfangseinheiten (1) untereinander bezüglich der von einer externen Sendeeinheit (S) ausgesandten Ultraschallsignale.

12. Verfahren nach Anspruch 11, umfassend:
einen ersten Schritt (S.1a), in dem die Sende- und Empfangseinheiten (1) in einer vorbestimmten Reihenfolge einen Ultraschallpuls aussenden,
einen zweiten Schritt (S.2a), in dem die von den Sende- und Empfangseinheiten (1) ausgesandten Ultraschallpulse in einer externen Empfangseinheit (E) empfangen werden, und
einen dritten Schritt (S.3a), in dem jeder der Sende- und Empfangseinheiten (1) jeweils eine eindeutige Adresse auf Grundlage eines Unterschieds in einem Empfangsparameter des Empfangs der Ultraschallimpulse in dieser externen Empfangseinheit (E) zugewiesen wird (Fig. 12).

13. Verfahren nach Anspruch 12, wobei die externe Empfangseinheit (E) nur ein einziges ultraschallempfindliches Mikrofon (E) aufweist, welches zu jeder der Sende- und Empfangseinheiten (1.1, 1.2, 1.3, 1.4) einen unterschiedlichen Abstand aufweist (Fig. 4), und
wobei der dritte Schritt (S.3a) das Messen der sich voneinander unterscheidenden absoluten Schalllaufzeiten der Ultraschallpulse von den einzelnen Sende- und Empfangseinheiten (1.1, 1.2, 1.3, 1.4) zum Mikrofon (E) umfasst.

14. Verfahren nach Anspruch 12, wobei die externe Empfangseinheit (E) mehrere ultraschallempfindliche Mikrofone (E1, E2) aufweist (Fig. 5), und
wobei der dritte Schritt (S.3a) das Messen der absoluten Schalllaufzeiten der Ultraschallpulse von den einzelnen Sende- und Empfangseinheiten (1.1, 1.2, 1.3, 1.4) zu den Mikrofonen (E1, E2) und/oder das Messen von Laufzeitunterschieden zumindest eines Ultraschallpulses von einer der Sende- und Empfangseinheiten (1) zu den Mikrofonen (E1, E2) umfasst.

15. Verfahren nach Anspruch 12, wobei die externe Empfangseinheit (E) mehrere ultraschallempfindliche Mikrofone (E1, E2, E3, E4) aufweist, von denen je eines jeder der Sende- und Empfangseinheiten (1.1, 1.2, 1.3, 1.4) zugeordnet wird, wobei die auf diese Weise gebildeten Paare aus Mikrofon und Sende- und Empfangseinheit voneinander schallentkoppelt (5) werden (Fig. 6), und
wobei der dritte Schritt (S.3a) die Detektion des Empfangs des jeweiligen Ultraschallpulses nur in dem jeweils zugeordneten Mikrofon umfasst.

16. Verfahren nach Anspruch 11, umfassend:
einen ersten Schritt (S.1b), in welchem die Sende- und Empfangseinheiten (1) in reinen Ultraschall-Empfangsbetrieb versetzt werden,
einen zweiten Schritt (S.2b), in welchem die Sende- und Empfangseinheiten (1) von einer externen Sendeeinheit (S) mit Ultraschallsignalen beaufschlagt werden, und einen dritten Schritt (S.3b), in welchem einer ersten der Sende- und Empfangseinheiten (1) eine eindeutige Adresse auf Grundlage einer Empfangseigenschaft in dieser ersten Sende- und Empfangseinheit (1) bezüglich der von der externen Sendeeinheit (S) ausgesandten Ultraschallsignale zugewiesen wird, wobei sich die Empfangseigenschaft dieser ersten Sende- und Empfangseinheit (1) in einem bestimmten Zeitintervall von der Empfangseigenschaft zumindest derjenigen Sende- und Empfangseinheiten (1) unterscheidet, welchen noch keine eindeutige Adresse zugewiesen wurde (Fig. 13).

17. Verfahren nach Anspruch 16, wobei jede Sende- und Empfangseinheit (1.1, 1.3, 1.4) außer der ersten Sende- und Empfangseinheit (1.2) in dem bestimmten Zeitintervall schallabgeschirmt (5) wird, so dass nur diese erste Sende- und Empfangseinheit (1.2) in der Lage ist, die Ultraschallsignale von der externen Sendeeinheit (S) zu empfangen (Fig. 8), und
wobei der dritte Schritt (S.3b) die Detektion des Empfangs der Ultraschallsignale in jeder Sende- und Empfangseinheit (1.1, 1.3, 1.4) außer der ersten Sende- und Empfangseinheit (1.2) umfasst.

18. Verfahren nach Anspruch 16, wobei die erste Sende- und Empfangseinheit (1.3) in dem bestimmten Zeitintervall schallabgeschirmt (5) wird, so dass nur diese erste Sende- und Empfangseinheit (1.3) nicht in der Lage ist, die Ultraschallsignale von der externen Sendeeinheit (S) zu empfangen (Fig. 9), und
wobei der dritte Schritt (S.3b) die Detektion des Empfangs der Ultraschallsignale nur in der ersten Sende- und Empfangseinheit (1.3) umfasst.

19. Verfahren nach Anspruch 16, wobei die externe Sendeeinheit (S) nur eine einzige Ultraschallquelle (S) aufweist, welche zu jeder der Sende- und Empfangseinheiten (1.1, 1.2, 1.3, 1.4) einen unterschiedlichen Abstand aufweist, und
wobei der dritte Schritt (S.3b) das Messen der sich aufgrund der Laufzeitunterschiede eines von der Ultraschallquelle (S) ausgesandten Ultraschallpulses zu den Sende- und Empfangseinheiten (1.1, 1.2, 1.3, 1.4) voneinander unterscheidenden Zeitpunkte des Empfangs des Ultraschallpulses in den Sende- und Empfangseinheiten (1.1, 1.2, 1.3, 1.4) umfasst (Fig. 10).

20. Verfahren nach Anspruch 16, wobei die externe Sendeeinheit (S) mehrere Ultraschallquellen (S1, S2, S3, S4) aufweist, von denen je eine jeder der Sende- und Empfangseinheiten (1.1, 1.2, 1.3, 1.4) zugeordnet wird, wobei die auf diese Weise gebildeten Paare aus Ultraschallquelle und Sende- und Empfangseinheit voneinander schallentkoppelt (5) werden (Fig. 11), und
wobei der dritte Schritt (S.3b) die Detektion des Empfangs des jeweiligen Ultraschallsignals nur in der jeweils zugeordneten Sende- und Empfangseinheit umfasst.

## Claims

1. System for addressing a plurality of transmission and reception units (1, 1.1, 1.2, 1.3, 1.4) in an ultrasonic distance measuring device, comprising an address allocation device (AZ) for allocating an explicit address to each of the transmission and reception units (1), **characterized in that** an explicit address is allocated to each of the transmission and reception units (1) either (Figure 2a) on the basis of a difference in a reception property of the reception of ultrasound pulses, which are emitted by the transmission and reception units (1), in an external reception unit (E, E1, E2, E3, E4) or (Figure 2b) on the basis of a difference in a reception property of the transmission and reception units (1) among one another in respect of the ultrasound signals emitted by an external transmission unit (S, S1, S2, S3, S4).

2. System according to Claim 1, also comprising:
a control unit (C) which is set up to put the transmission and reception units (1) into an ultrasound transmission mode in which the transmission and reception units (1) emit an ultrasound pulse in a predetermined order, and
an external reception unit (E) for receiving the ultrasound pulses emitted by the transmission and reception units (1),
wherein the address allocation device (AZ) is set up to allocate each of the transmission and reception units (1) a respective explicit address on the basis of a difference in a reception parameter of the reception of the ultrasound pulses in this external reception unit (E) (Figure 3).

3. System according to Claim 2, wherein the external reception unit (E) is in the form of a single ultrasound-sensitive microphone (E) which is at a different distance from each of the transmission and reception units (1.1, 1.2, 1.3, 1.4), with the result that the absolute sound travel times of the ultrasound pulses from the individual transmission and reception units (1.1, 1.2, 1.3, 1.4) to the microphone (E) differ from one another (Figure 4).

4. System according to Claim 2, wherein the external reception unit (E) comprises a plurality of ultrasound-sensitive microphones (E1, E2), and wherein the address allocation is effected on the basis of the absolute sound travel times of the ultrasound pulses from the individual transmission and reception units (1.1, 1.2, 1.3, 1.4) to the microphones (E1, E2) and/or on the basis of travel time differences in at least one ultrasound pulse from one of the transmission and reception units (1) to the microphones (E1, E2) (Figure 5) .

5. System according to Claim 2, wherein the external reception unit (E) comprises a plurality of ultrasound-sensitive microphones (E1, E2, E3, E4), a respective one of which is associated with each of the transmission and reception units (1.1, 1.2, 1.3, 1.4), and wherein the thus formed pairs of microphone and transmission and reception unit are decoupled from one another in terms of sound (5) (Figure 6).

6. System according to Claim 1, also comprising:
a control unit (C) which is set up to put the transmission and reception units (1) into pure ultrasound reception mode, and
an external transmission unit (S) for applying ultrasound signals to the transmission and reception units (1),
wherein the address allocation device (AZ) is set up to allocate a first of the transmission and reception units (1) an explicit address on the basis of a reception property in said first transmission and reception unit (1) in respect of the ultrasound signals emitted by the external transmission unit (S), wherein the reception property of said first transmission and reception unit (1) in a particular interval of time differs from the reception property of at least those transmission and reception units (1) which have not yet been allocated an explicit address (Figure 7).

7. System according to Claim 6, wherein acoustic shielding (5) for each transmission and reception unit (1.1, 1.3, 1.4) apart from the first transmission and reception unit (1.2) in the particular interval of time means that only this first transmission and reception unit (1.2) is capable of receiving the ultrasound signals from the external transmission unit (S) (Figure 8).

8. System according to Claim 6, wherein acoustic shielding (5) for the first transmission and reception unit (1.3) in the particular interval of time means that only said first transmission and reception unit (1.3) is not capable of receiving the ultrasound signals from the external transmission unit (S) (Figure 9).

9. System according to Claim 6, wherein the external transmission unit (S) is in the form of a single ultrasound source (S) which is at a different distance from each of the transmission and reception units (1.1, 1.2, 1.3, 1.4), with the result that the travel time differences in an ultrasound pulse emitted by the ultrasound source (S) to the transmission and reception units (1.1, 1.2, 1.3, 1.4) mean that the times at which the ultrasound pulse is received in the transmission and reception units (1.1, 1.2, 1.3, 1.4) differ from one another (Figure 10).

10. System according to Claim 6, wherein the external transmission unit (S) comprises a plurality of ultrasound sources (S1, S2, S3, S4), a respective one of which is associated with each of the transmission and reception units (1.1, 1.2, 1.3, 1.4), and wherein the thus formed pairs of ultrasound source and transmission and reception unit are decoupled from one another in terms of sound (5) (Figure 11).

11. Method for addressing a plurality of transmission and reception units (1, 1.1, 1.2, 1.3, 1.4) in an ultrasonic distance measuring device, wherein each of the transmission and reception units (1) is allocated an explicit address, **characterized in that** each of the transmission and reception units (1) is allocated to an explicit address either on the basis of a difference in a reception property of the reception of ultrasound pulses, which are emitted by the transmission and reception units (1), in an external reception unit (E) or on the basis of a difference in a reception property of the transmission and reception units (1) among one another in respect of the ultrasound signals emitted by an external transmission unit (S).

12. Method according to Claim 11, comprising:
a first step (S.1a), in which the transmission and reception units (1) emit an ultrasound pulse in a predetermined order,
a second step (S.2a), in which the ultrasound pulses emitted by the transmission and reception units (1) are received in an external reception unit (E), and
a third step (S.3a), in which each of the transmission and reception units (1) is allocated a respective explicit address on the basis of a difference in a reception parameter of the reception of the ultrasound pulses in said external reception unit (E) (Figure 12).

13. Method according to Claim 12, wherein the external reception unit (E) has only a single ultrasound-sensitive microphone (E) which is at a different distance from each of the transmission and reception units (1.1, 1.2, 1.3, 1.4) (Figure 4), and
wherein the third step (S.3a) comprises measurement of the different absolute sound travel times of the ultrasound pulses from the individual transmission and reception units (1.1, 1.2, 1.3, 1.4) to the microphone (E).

14. Method according to Claim 12, wherein the external reception unit (E) has a plurality of ultrasound-sensitive microphones (E1, E2) (Figure 5), and
wherein the third step (S.3a) comprises measurement of the absolute sound travel times of the ultrasound pulses from the individual transmission and reception units (1.1, 1.2, 1.3, 1.4) to the microphones (E1, E2) and/or measurement of travel time differences in at least one ultrasound pulse from one of the transmission and reception units (1) to the microphones (E1, E2).

15. Method according to Claim 12, wherein the external reception unit (E) has a plurality of ultrasound-sensitive microphones (E1, E2, E3, E4), a respective one of which is allocated to each of the transmission and reception units (1.1, 1.2, 1.3, 1.4), wherein the thus formed pairs of microphone and transmission and reception unit are decoupled from one another in terms of sound (5) (Figure 6), and
wherein the third step (S.3a) comprises detection of the reception of the respective ultrasound pulse only in the respectively associated microphone.

16. Method according to Claim 11, comprising:
a first step (S.1b), in which the transmission and reception units (1) are put into pure ultrasound reception mode,
a second step (S.2b), in which the transmission and reception units (1) have ultrasound signals applied to them by an external transmission unit (S), and
a third step (S.3b), in which a first of the transmission and reception units (1) is allocated an explicit address on the basis of a reception property in said first transmission and reception unit (1) in respect of the ultrasound signals emitted by the external transmission unit (S), wherein the reception property of said first transmission and reception unit (1) in a particular interval of time differs from the reception property of at least those transmission and reception units (1) which have not yet been allocated an explicit address (Figure 13).

17. Method according to Claim 16, wherein each transmission and reception unit (1.1, 1.3, 1.4) apart from the first transmission and reception unit (1.2) is acoustically shielded (5) in the particular interval of time, with the result that only this first transmission and reception unit (1.2) is capable of receiving the ultrasound signals from the external transmission unit (S) (Figure 8), and
wherein the third step (S.3b) comprises detection of the reception of the ultrasound signals in each transmission and reception unit (1.1, 1.3, 1.4) apart from the first transmission and reception unit (1.2).

18. Method according to Claim 16, wherein the first transmission and reception unit (1.3) is acoustically shielded (5) in the particular interval of time, with the result that only this first transmission and reception unit (1.3) is not capable of receiving the ultrasound signals from the external transmission unit (S) (Figure 9), and
wherein the third step (S.3b) comprises detection of the reception of the ultrasound signals only in the first transmission and reception unit (1.3).

19. Method according to Claim 16, wherein the external transmission unit (S) has only a single ultrasound source (S), which is at a different distance from each of the transmission and reception units (1.1, 1.2, 1.3, 1.4), and
wherein the third step (S.3b) comprises measurement of the different times at which the ultrasound pulse is received in the transmission and reception units (1.1, 1.2, 1.3, 1.4), said times differing on the basis of the travel time differences in an ultrasound pulse emitted by the ultrasound source (S) to the transmission and reception units (1.1, 1.2, 1.3, 1.4) (Figure 10).

20. Method according to Claim 16, wherein the external transmission unit (S) has a plurality of ultrasound sources (S1, S2, S3, S4), a respective one of which is allocated to each of the transmission and reception units (1.1, 1.2, 1.3, 1.4), wherein the thus formed pairs of ultrasound source and transmission and reception unit are decoupled from one another in terms of sound (5) (Figure 11), and
wherein the third step (S.3b) comprises detection of the reception of the respective ultrasound signal only in the respectively associated transmission and reception unit.

## Revendications

1. Système d'adressage d'une pluralité d'unités d'émission et de réception (1, 1.1, 1.2, 1.3, 1.4) d'un dispositif de mesure de distance à ultrasons, comprenant un dispositif d'attribution d'adresse (AZ) pour attribuer une adresse unique à chacune des unités d'émission et de réception (1), **caractérisé en ce que** l'attribution d'une adresse unique à chacune des unités d'émission et de réception (1) s'effectue soit (figure 2a) sur la base d'une différence au niveau d'une caractéristique de réception de la réception d'impulsions ultrasoniques qui sont émises par les unités d'émission et de réception (1), dans une unité de réception externe (E, E1, E2, E3, E4), soit (figure 2b) sur la base d'une différence au niveau d'une caractéristique de réception des unités d'émission et de réception (1) entre elles par rapport aux signaux ultrasoniques émis par une unité d'émission externe (S, S1, S2, S3, S4).

2. Système selon la revendication 1, comprenant en outre :
une unité de commande (C) qui est configurée pour amener les unités d'émission et de réception (1) dans un mode d'émission d'ultrasons dans lequel les unités d'émission et de réception (1) émettent une impulsion ultrasonique dans une séquence prédéfinie et
une unité de réception externe (E) pour recevoir les impulsions ultrasoniques émises par les unités d'émission et de réception (1),
le dispositif d'attribution d'adresse (AZ) étant configuré pour attribuer à chacune des unités d'émission et de réception (1) respectivement une adresse unique sur la base d'une différence au niveau d'un paramètre de réception de la réception de l'impulsion ultrasonique dans cette unité de réception externe (E) (figure 3).

3. Système selon la revendication 2, avec lequel l'unité de réception externe (E) est réalisée sous la forme d'un microphone (E) unique sensible aux ultrasons, lequel présente un écart différent par rapport à chacune des unités d'émission et de réception (1.1, 1.2, 1.3, 1.4) de sorte que les temps de propagation du son absolus des impulsions ultrasoniques depuis les unités d'émission et de réception (1.1, 1.2, 1.3, 1.4) individuelles jusqu'au microphone (E) sont différents les uns des autres (figure 4).

4. Système selon la revendication 2, avec lequel l'unité de réception externe (E) comprend plusieurs microphones (E1, E2) sensibles aux ultrasons et avec lequel l'attribution d'adresse s'effectue sur la base des temps de propagation du son absolus des impulsions ultrasoniques depuis les unités d'émission et de réception (1.1, 1.2, 1.3, 1.4) individuelles jusqu'aux microphones (E1, E2) et/ou sur la base des différences de temps de propagation d'au moins une impulsion ultrasonique de l'une des unités d'émission et de réception (1) jusqu'aux microphones (E1, E2) (figure 5).

5. Système selon la revendication 2, avec lequel l'unité de réception externe (E) comprend plusieurs microphones (E1, E2, E3, E4) sensibles aux ultrasons dont chacun est respectivement associé à chacune des unités d'émission et de réception (1.1, 1.2, 1.3, 1.4) et avec lequel les paires ainsi formées d'un microphone et d'une unité d'émission et de réception sont découplées acoustiquement (5) les unes des autres (figure 6).

6. Système selon la revendication 1, comprenant en outre :
une unité de commande (C) qui est configurée pour amener les unités d'émission et de réception (1) dans un mode de réception d'ultrasons pur et
une unité d'émission externe (S) pour exposer les unités d'émission et de réception (1) à des signaux ultrasoniques,
le dispositif d'attribution d'adresse (AZ) étant configuré pour attribuer à une première des unités d'émission et de réception (1) une adresse unique sur la base d'une caractéristique de réception dans cette première unité d'émission et de réception (1) par rapport aux signaux ultrasoniques émis par l'unité d'émission externe (S), la caractéristique de réception de cette première unité d'émission et de réception (1) étant différente, dans un intervalle de temps donné, de la caractéristique de réception d'au moins les unités d'émission et de réception (1) à qui aucune adresse unique n'a encore été attribuée (figure 7).

7. Système selon la revendication 6, avec lequel, du fait du blindage acoustique (5) de chaque unité d'émission et de réception (1.1, 1.3, 1.4), à l'exception de la première unité d'émission et de réception (1.2), seule cette première unité d'émission et de réception (1.2) est en mesure de recevoir les signaux ultrasoniques de la part de l'unité d'émission externe (S) pendant l'intervalle de temps donné (figure 8).

8. Système selon la revendication 6, avec lequel, du fait du blindage acoustique (5) de la première unité d'émission et de réception (1.3), seule cette première unité d'émission et de réception (1.3) est en mesure de recevoir les signaux ultrasoniques de la part de l'unité d'émission externe (S) pendant l'intervalle de temps donné (figure 9).

9. Système selon la revendication 6, avec lequel l'unité d'émission externe (S) est réalisée sous la forme d'une source d'ultrasons unique (S) qui présente un écart différent par rapport à chacune des unités d'émission et de réception (1.1, 1.2, 1.3, 1.4), de sorte que les instants de réception de l'impulsion ultrasonique dans les unités d'émission et de réception (1.1, 1.2, 1.3, 1.4) sont différents les uns des autres en raison des différences de temps de propagation d'une impulsion ultrasonique émise par la source d'ultrasons (S) vers les unités d'émission et de réception (1.1, 1.2, 1.3, 1.4) (figure 10).

10. Système selon la revendication 6, avec lequel l'unité d'émission externe (S) comprend plusieurs sources d'ultrasons (S1, S2, S3, S4) dont chacune est respectivement associée à chacune des unités d'émission et de réception (1.1, 1.2, 1.3, 1.4), et avec lequel les paires ainsi formées d'une source d'ultrasons et d'une unité d'émission et de réception sont découplées acoustiquement (5) les unes des autres (figure 11).

11. Procédé d'adressage d'une pluralité d'unités d'émission et de réception (1, 1.1, 1.2, 1.3, 1.4) d'un dispositif de mesure de distance à ultrasons, selon lequel une adresse unique est attribuée à chacune des unités d'émission et de réception (1), **caractérisé en ce que** l'attribution d'une adresse unique à chacune des unités d'émission et de réception (1) s'effectue soit sur la base d'une différence au niveau d'une caractéristique de réception de la réception d'impulsions ultrasoniques qui sont émises par les unités d'émission et de réception (1), dans une unité de réception externe (E), soit sur la base d'une différence au niveau d'une caractéristique de réception des unités d'émission et de réception (1) entre elles par rapport aux signaux ultrasoniques émis par une unité d'émission externe (S).

12. Procédé selon la revendication 11, comprenant :
une première étape (S.1a) dans laquelle les unités d'émission et de réception (1) émettent une impulsion ultrasonique dans une séquence prédéfinie,
une deuxième étape (S.2a) dans laquelle les impulsions ultrasoniques émises par les unités d'émission et de réception (1) sont reçues dans une unité de réception externe (E), et
une troisième étape (S.3a) dans laquelle une adresse unique est respectivement attribuée à chacune des unités d'émission et de réception (1) sur la base d'une différence au niveau d'un paramètre de réception de la réception de l'impulsion ultrasonique dans cette unité de réception externe (E) (figure 12).

13. Procédé selon la revendication 12, selon lequel l'unité de réception externe (E) ne présente qu'un unique microphone (E) sensible aux ultrasons, lequel présente un écart différent par rapport à les unités d'émission et de réception (1.1, 1.2, 1.3, 1.4)individuelles (figure 4) et
selon lequel la troisième étape (S.3a) comprend la mesure des temps de propagation du son absolus différents les uns des autres des impulsions ultrasoniques depuis les unités d'émission et de réception (1.1, 1.2, 1.3, 1.4) individuelles jusqu'au microphone (E).

14. Procédé selon la revendication 12, selon lequel l'unité de réception externe (E) présente plusieurs microphones (E1, E2) sensibles aux ultrasons (figure 5) et
selon lequel la troisième étape (S.3a) comprend la mesure des temps de propagation du son absolus des impulsions ultrasoniques depuis les unités d'émission et de réception (1.1, 1.2, 1.3, 1.4) individuelles jusqu'aux microphones (E1, E2) et/ou la mesure des différences de temps de propagation d'au moins une impulsion ultrasonique de l'une des unités d'émission et de réception (1) jusqu'aux microphones (E1, E2).

15. Procédé selon la revendication 12, selon lequel l'unité de réception externe (E) présente plusieurs microphones (E1, E2, E3, E4) sensibles aux ultrasons dont chacun est respectivement associé à l'une des unités d'émission et de réception (1.1, 1.2, 1.3, 1.4), les paires ainsi formées d'un microphone et d'une unité d'émission et de réception étant découplées acoustiquement (5) les unes des autres (figure 6), et selon lequel la troisième étape (S.3a) comprend la détection de la réception de l'impulsion ultrasonique correspondante uniquement dans le microphone respectif associé.

16. Procédé selon la revendication 11, comprenant :
une première étape (S.1b) dans laquelle les unités d'émission et de réception (1) sont amenées dans un mode de réception d'ultrasons pur,
une deuxième étape (S.2b) dans laquelle les unités d'émission et de réception (1) sont exposées à des signaux ultrasoniques par une unité d'émission externe (S), et
une troisième étape (S.3b) dans laquelle une adresse unique est attribuée à une première des unités d'émission et de réception (1) sur la base d'une caractéristique de réception dans cette première unité d'émission et de réception (1) par rapport aux signaux ultrasoniques émis par l'unité d'émission externe (S),
la caractéristique de réception de cette première unité d'émission et de réception (1) étant différente, dans un intervalle de temps donné, de la caractéristique de réception d'au moins les unités d'émission et de réception (1) à qui aucune adresse unique n'a encore été attribuée (figure 13).

17. Procédé selon la revendication 16, selon lequel chaque unité d'émission et de réception (1.1, 1.3, 1.4), à l'exception de la première unité d'émission et de réception (1.2), est blindée acoustiquement (5) pendant l'intervalle de temps donné, de sorte que seule cette première unité d'émission et de réception (1.2) est en mesure de recevoir les signaux ultrasoniques de la part de l'unité d'émission externe (S) (figure 8), et selon lequel la troisième étape (S.3b) comprend la détection de la réception des signaux ultrasoniques dans chaque unité d'émission et de réception (1.1, 1.3, 1.4) à l'exception de la première unité d'émission et de réception (1.2).

18. Procédé selon la revendication 16, selon lequel la première unité d'émission et de réception (1.3) est blindée acoustiquement (5) pendant l'intervalle de temps donné, de sorte que seule cette première unité d'émission et de réception (1.3) n'est pas en mesure de recevoir les signaux ultrasoniques de la part de l'unité d'émission externe (S) (figure 9), et selon lequel la troisième étape (S.3b) comprend la détection de la réception des signaux ultrasoniques uniquement dans la première unité d'émission et de réception (1.3).

19. Procédé selon la revendication 16, selon lequel l'unité d'émission externe (S) ne présente qu'une unique source d'ultrasons (S), laquelle présente un écart différent par rapport à chacune des unités d'émission et de réception (1.1, 1.2, 1.3, 1.4), et selon lequel la troisième étape (S.3b) comprend la mesure des instants de réception de l'impulsion ultrasonique dans les unités d'émission et de réception (1.1, 1.2, 1.3, 1.4), différents les uns des autres en raison des différences de temps de propagation d'une impulsion ultrasonique émise par la source d'ultrasons (S) vers les unités d'émission et de réception (1.1, 1.2, 1.3, 1.4) (figure 10).

20. Procédé selon la revendication 16, selon lequel l'unité d'émission externe (S) présente plusieurs sources d'ultrasons (S1, S2, S3, S4) dont chacune est respectivement associée à chacune des unités d'émission et de réception (1.1, 1.2, 1.3, 1.4), les paires ainsi formées d'une source d'ultrasons et d'une unité d'émission et de réception étant découplées acoustiquement (5) les unes des autres (figure 11), et selon lequel la troisième étape (S.3b) comprend la détection de la réception du signal ultrasonique respectif uniquement dans l'unité d'émission et de réception associée respective.
